# FASCICULE DE BREVET EUROPEEN

(11) **EP 3 509 871 B1**
(45) Date de publication et mention de la délivrance du brevet: **18.08.2021**
(21) Numéro de dépôt: 17771494.6
(22) Date de dépôt: 07.09.2017
(51) Int. Cl.: B44B 11/04, B44C 1/24, B44B 5/02, E04F 21/04, E01C 19/43

(54) **MATRICE DESTINEE A L'IMPRESSION D'UN RELIEF SUR UN ENDUIT**
MATRIZE ZUM PRÄGEN EINER RELIEFMUSTERS AUF EINER BESCHICHTUNG
MATRIX FOR IMPRINTING A RAISED PATTERN ON A COATING

(30) Priorité: 08.09.2016 FR 1658361
(43) Date de publication de la demande: 17.07.2019
(73) Titulaire: SAINT-GOBAIN WEBER, 94370 Sucy-en-Brie (FR)
(72) Inventeur: DEVORET, Anne, 75013 Paris (FR); CLAUDE, Camille, 75016 Paris (FR); BALESTE, Stéphanie, 01450 Poncin (FR); GIRET, Antoine, 75005 Paris (FR)
(74) Mandataire: Saint-Gobain Recherche
(86) Numéro de dépôt international: PCT/FR2017/052370
(87) Numéro de publication internationale: WO 2018/046852

(56) Documents cités:
- GB-A- 2 214 211
- US-A- 4 135 840
- US-A- 5 487 656

## Description

### DOMAINE TECHNIQUE

La présente invention concerne l'impression d'un relief sur un enduit, aussi appelée matriçage d'un enduit, notamment un enduit appliqué sur une paroi, un sol ou un plafond ou appliqué sur une partie d'un élément préfabriqué entrant dans la constitution d'une paroi, d'un sol ou d'un plafond.

Plus particulièrement, la présente invention concerne une matrice adaptée pour la réalisation d'une telle impression.

### ARRIERE-PLAN DE L'INVENTION

Il est connu de déposer une couche d'enduit sur une paroi ou un sol à revêtir. Appliqué sur une façade d'un bâtiment, l'enduit remplit généralement une fonction décorative et d'imperméabilité. Appliqué sur une cloison intérieure, sa fonction est principalement décorative. Il existe différents types d'enduits en fonction du liant qu'il comprend. Un enduit peut contenir un liant organique, par exemple une résine acrylique (enduit organique) ou un liant minéral par exemple du ciment, du plâtre et/ou de la chaux (enduit minéral). Le choix du type d'enduit dépend de l'application recherchée.

Pour améliorer le rendu esthétique de l'enduit, il est connu d'appliquer sur l'enduit non encore durci une matrice munie d'une surface à relief comprenant généralement des motifs décoratifs.

Par exemple, la demande de brevet FR 2 777 829 décrit un procédé dans lequel une matrice à motifs décoratifs est appliquée sur une couche d'enduit frais pendant une durée de quelques minutes à quelques heures, avant d'être retirée. La matrice peut se présenter sous la forme d'une feuille plastique rigide ou semi-rigide, de faible épaisseur et ayant un poids au mètre carré élevé, appliquée sur l'enduit à l'aide d'une brosse ou d'une taloche. Les motifs décoratifs sont dans ce cas réalisés sur la feuille par thermoformage ou emboutissage. La matrice peut aussi comprendre un rouleau muni d'un relief appliqué sur la couche d'enduit en interposant un film plastique, de type polyane, afin d'éviter l'adhérence de l'enduit sur le rouleau. Les motifs décoratifs peuvent être des imitations de planches de bois, de tissage, de briques, de carreaux, de pierres, de pavage, de feuilles, de terre, etc.

Le procédé décrit dans ce document est toutefois délicat à mettre en œuvre, puisqu'il nécessite de positionner correctement la matrice par le biais de repères de positionnement lors du traitement de deux zones adjacentes du support, afin d'éviter que les raccords entre lesdites zones ne soient visibles.

Par ailleurs, le document US 4 135 840 A divulgue une matrice destinée à l'impression d'un relief sur un enduit, ladite matrice comprenant une surface munie d'un relief à imprimer aléatoire.

### OBJET ET RESUME DE L'INVENTION

L'un des objectifs de la présente invention est de proposer une matrice permettant de remédier aux inconvénients précités.

Cet objectif est atteint avec une matrice destinée à l'impression d'un relief sur un enduit, notamment un enduit appliqué sur une paroi, un sol ou un plafond ou appliqué sur élément préfabriqué entrant dans la constitution d'une paroi, d'un sol ou d'un plafond, ladite matrice comprenant une surface munie d'un relief à imprimer dit aléatoire, formé par un ensemble d'éléments unitaires interpénétrés, chaque élément unitaire étant tronqué par l'intersection de son volume avec le volume d'au moins un autre élément unitaire adjacent.

Dans le présent exposé, on entend par relief aléatoire un relief dans lequel les éléments unitaires sont distribués de manière aléatoire sur la surface.

Le relief de la matrice est typiquement considéré par rapport à une surface de base de la matrice, visible ou non, et qui peut être plane ou peut présenter un rayon de courbure sur toute ou partie de son étendue.

Un élément unitaire formant le relief peut être une surélévation locale (par exemple en bosse ou pointe) de la surface de la matrice par rapport à la surface de base précitée et dans ce cas le relief est dit « positif », ou peut être une dépression locale par rapport à ladite surface de base et dans ce cas, le relief est dit « négatif ».

Il a toutefois été constaté qu'un relief « positif » permet d'obtenir une empreinte plus lisible du relief sur l'enduit. Cela contribue également à éviter les poches d'air entre la matrice et l'enduit. Le rendu esthétique ainsi obtenu est particulièrement net. Le relief peut aussi être une combinaison de surélévations et de dépressions locales par rapport à la surface de base.

Selon l'invention, les éléments unitaires s'interpénètrent c'est-à-dire que les éléments unitaires ne sont pas strictement jointifs par mise en contact des arêtes de leur périmètre de base, mais que chaque élément unitaire est tronqué par l'intersection de son volume avec le volume d'au moins un autre élément unitaire adjacent. La disposition étant aléatoire, les volumes d'éléments voisins s'interpénètrent sur une étendue variable aléatoirement.

Chaque élément unitaire du relief s'étend sur une zone propre (non interpénétrée, c'est-à-dire non tronquée), sur laquelle le relief correspond à son relief propre et sur au moins une zone d'interpénétration où il s'interpénètre avec au moins un élément unitaire adjacent.

La matrice selon l'invention est particulièrement - mais non limitativement - adaptée pour l'impression d'un enduit sur une façade d'un bâtiment (neuf ou en rénovation), un système d'Isolation Thermique par l'Extérieur d'un bâtiment (aussi appelé ITE ou en anglais ETICS pour External Thermal Insulating Composite Systems), ou encore une cloison interne d'un bâtiment.

Grâce au caractère aléatoire du relief et à l'interpénétration des éléments unitaires le constituant, le relief est capable de se superposer à lui-même sans raccords visibles et sans destruction de sa lisibilité. Autrement dit, le relief peut être imprimé sur une première zone de traitement T1 d'une surface enduite, puis sur une deuxième zone de traitement T2 recouvrant en partie la zone T1, sans qu'aucun raccord ne soit visible aux abords de la zone de superposition de T1 et T2, c'est-à-dire sans que la zone de superposition puisse être distinguée visuellement des zones de non-superposition.

L'utilisation de repères de positionnement de la matrice n'est ainsi pas nécessaire.

Selon un exemple, la surface de la matrice munie du relief à imprimer présente une superficie totale comprise entre 0,1 et 1,5 m².

Le relief à imprimer peut comporter un nombre très variable d'éléments unitaires par unité de surface. Par exemple mais non limitativement, le nombre d'éléments unitaires par m² de surface peut être compris entre 10 et 10000.

Selon une disposition, il peut être prévu au moins 10 éléments unitaires sur la surface totale de la matrice munie du relief à imprimer, de manière à garantir une certaine densité de motifs. Mais cet exemple, là encore, n'est pas limitatif.

On distingue, dans le présent exposé, deux types de reliefs : les reliefs à interpénétration invisible d'une part, et les reliefs à interpénétration visible d'autre part.

Un relief à interpénétration invisible est tel qu'il est impossible de visualiser le contour d'un élément unitaire dans sa zone d'interpénétration. Dans ce cas, la partie visible de l'élément unitaire est limitée à sa zone propre.

Selon un exemple de relief à interpénétration invisible, les éléments unitaires sont de forme polyédrique, dont les arêtes peuvent être droites ou courbes, et les faces peuvent être planes ou courbes, notamment de forme pyramidale, de préférence avec comme base un polygone à au moins 3 côtés, en particulier au moins 5 côtés.

Un relief à interpénétration visible est tel qu'il est possible de visualiser le contour d'un élément unitaire dans sa zone d'interpénétration. Dans ce cas, au moins une partie de l'élément unitaire reste visible au-delà de sa zone propre, l'ensemble de l'élément unitaire pouvant être deviné à l'observation.

Selon un exemple de relief à interpénétration visible, chaque élément unitaire est formé d'un ensemble de nervures concentriques séparées par des vallées.

Pour la suite du présent exposé, on définit le profil du relief de la matrice comme le profil de ce relief vu en section dans un plan transversal sensiblement orthogonal à la surface de base de la matrice.

Le profil du relief est généralement constitué d'une succession d'éléments de profil constitués chacun par la succession d'une saillie et d'un creux du profil.

La hauteur visible d'un élément de profil est définie comme la hauteur mesurée entre le point le plus haut de l'élément du profil (sommet de la saillie) et son point le plus bas (point bas du creux).

La hauteur visible moyenne des éléments unitaires du relief est définie ici comme la moyenne arithmétique des valeurs absolues des hauteurs visibles des éléments du profil sur une longueur de base de 10 centimètres.

Selon un exemple, la hauteur visible moyenne des éléments unitaires du relief à imprimer est comprise entre 0.5 et 50 mm, de préférence comprise entre 1 et 20 mm.

Cette hauteur visible moyenne est à distinguer de la hauteur absolue de chaque élément unitaire du relief, qui est la hauteur de cet élément mesurée par rapport à la surface de base de la matrice. Cette hauteur absolue est généralement la même pour tous les éléments unitaires constituant le relief. A noter que dans le cas de reliefs à interpénétration visible, la hauteur absolue peut être égale à la hauteur visible.

Selon une réalisation préférée, les éléments unitaires s'interpénètrent deux à deux sans toutefois tronquer le sommet de chaque élément unitaire pour des reliefs positifs, respectivement sans tronquer leur point le plus bas pour des reliefs négatifs. Autrement dit, le sommet, respectivement le point le plus bas, de chaque élément unitaire reste compris dans sa zone propre.

La largeur visible d'un élément unitaire du relief est définie comme le diamètre du plus petit cercle dans lequel s'inscrit la zone propre de cet élément unitaire pour un relief à interpénétration invisible, et comme le diamètre du plus petit cercle dans lequel s'inscrit l'élément unitaire dans son entier pour un relief à interpénétration visible.

Selon un exemple, la largeur visible maximale des éléments unitaires du relief à imprimer est comprise entre 1 et 100 mm, de préférence entre 1 et 50 mm.

Les éléments unitaires formant le relief n'ont pas nécessairement tous la même forme, les mêmes dimensions ou encore la même orientation. Toutefois, comme expliqué précédemment, la hauteur absolue de chaque élément unitaire donc de chaque type d'élément unitaire, est généralement identique.

Selon un exemple particulier, le relief comprend au moins un premier groupe d'éléments unitaires et au moins un deuxième groupe d'éléments unitaires de forme identique à ceux du premier groupe mais présentant une orientation différente par rapport à ceux du premier groupe, notamment par rotation autour d'un axe orthogonal à la surface de base de la matrice, les éléments de chaque groupe étant répartis de manière aléatoire sur la surface de la matrice.

Selon un exemple particulier préféré, tous les éléments unitaires du relief sont de forme identique.

Les éléments unitaires peuvent être de forme identique et présenter des dimensions identiques ou différentes. Par exemple, les éléments unitaires peuvent se présenter sous la forme de pyramides hexagonales, de hauteur absolue identique, mais de bases de largeurs différentes. Très préférentiellement, les éléments unitaires sont de forme et de dimension identique, ce qui permet une très bonne superposition sans aucun raccord visible.

L'invention concerne également un outil destiné à l'impression d'un relief sur un enduit, notamment un enduit appliqué sur ou formant la surface d'une paroi, d'un sol ou d'un plafond ou un enduit formant toute ou partie d'un élément préfabriqué entrant dans la constitution d'une paroi, d'un sol ou d'un plafond, comprenant une matrice telle que définie précédemment.

Selon un exemple, l'outil peut être un outil de matriçage manuel destiné à être mis en œuvre directement sur chantier par un ou plusieurs opérateurs. Cet outil peut par exemple être un rouleau ou un outil de tamponnage.

Selon un autre exemple, l'outil peut être un outil de matriçage robotisé, destiné à être utilisé sur chantier.

Une matrice selon l'invention peut également être mise en œuvre dans la réalisation d'éléments préfabriqués pré-matricés, par exemple sous la forme de panneaux pré-matricés, notamment des panneaux de bardage extérieur, pouvant en particulier être juxtaposés côté à côte sans apporter d'attention particulière à leur mise en place, la continuité esthétique du relief global formé par les panneaux étant assurée par le caractère aléatoire du relief et l'interpénétration des éléments unitaires formant celui-ci.

La matrice peut ainsi être intégrée par exemple dans un processus de matriçage industriel intervenant sur une chaîne de production d'un élément enduit ou d'une plaque préfabriqué(e) à partir d'un matériau malléable, notamment cimentaire, plâtre, d'argile, de terre, ou enduit à base organique, et destiné(e) à une utilisation en façade, en sol ou en intérieur. La matrice est par exemple intégrée à des rouleaux de matriçage permettant le matriçage en continu d'éléments préfabriqués du type précités sur une chaîne de production.

Selon un autre exemple, la matrice est une matrice numérique qui peut être utilisée par le biais d'un système d'impression 3D en continu.

La matrice numérique comprend le fichier numérique des coordonnées des points définissant la surface du relief à imprimer (topographie), ainsi que les instructions adaptées pour déplacer la tête de l'imprimante dans une séquence de positions suivant lesdites coordonnées. L'invention a alors également pour objet un programme informatique comprenant un code programme pour mettre en œuvre les étapes du procédé d'impression 3D utilisant la matrice numérique, lorsque le programme est exécuté dans un ordinateur, ou un appareil pour fabrication additive. Elle a aussi pour objet un support lisible en machine comprenant le fichier numérique de la matrice numérique, incluant le code programme d'un programme informatique pour mettre en œuvre le procédé d'impression 3D utilisant la matrice numérique, lorsque le programme est exécuté dans un ordinateur, ou un appareil pour fabrication additive.

La matrice peut également être intégrée dans un processus de moulage, en étant mise en place en fond de moule. Elle peut par exemple être mise en œuvre pour la réalisation de pièces de construction ou de parement et en particulier de béton pré-matricé, moulé par banchage ou selon toute technique de moulage industrielle existante.

L'invention concerne enfin un support choisi parmi une paroi, un sol ou un plafond ou un élément préfabriqué destiné à former une paroi, un sol ou un plafond, ledit support étant revêtu d'un enduit ou ledit élément présentant une couche superficielle présentant un relief imprimé susceptible d'être issu de matriçage avec une matrice telle que définie précédemment, dans lequel le relief imprimé correspond à l'empreinte laissée par un relief à imprimer dit aléatoire, formé par un ensemble d'éléments unitaires interpénétrés, chaque élément unitaire étant tronqué par l'intersection de son volume avec le volume d'au moins un autre élément unitaire adjacent.

Plusieurs exemples ou modes de réalisation sont décrits dans le présent exposé. Toutefois, sauf précision contraire, les caractéristiques décrites, en relation avec un exemple ou mode de réalisation quelconque, peuvent être appliquées à un autre exemple ou mode de réalisation.

L'invention concerne en outre une méthode d'impression d'un relief sur un enduit, notamment un enduit appliqué sur une zone donnée d'une paroi, d'un sol ou d'un plafond ou appliqué sur un élément préfabriqué entrant dans la constitution d'une paroi, d'un sol ou d'un plafond, ladite impression étant réalisée avec un outil comprenant la matrice selon l'invention, caractérisée en ce que ladite méthode comprend une étape consistant à appliquer l'outil sur une pluralité de zone de traitement pour imprimer ledit relief, l'application de l'outil étant réalisée de façon aléatoire, jusqu'à ce que toute la surface de ladite zone à imprimer soit recouverte du motif.

Selon un exemple, l'étape d'application est réalisée pour qu'au moins une partie des zones de traitement se chevauchent. Par application aléatoire, on comprend que les différentes applications n'ont pas de liens entre elles c'est-à-dire que leur position, leur orientation ne dépend pas de la position et de l'orientation de la matrice lors de l'application immédiatement précédente.

### BREVE DESCRIPTION DES DESSINS

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels:
- La figure 1 illustre une matrice selon un premier mode de réalisation de l'invention ;
- La figure 2 montre un élément unitaire du relief de la figure 1, en vue de dessus ;
- La figure 3 montre plus en détail le relief de la matrice de la figure 1 ;
- La figure 4 est une vue en section selon le plan transversal IV-IV de la figure 3 ;
- La figure 5 montre des éléments unitaires formant le relief de la figure 1, de forme et dimensions identiques mais d'orientation différentes ;
- La figure 6 illustre différentes zones de traitement d'un enduit à l'aide d'une matrice selon l'invention ;
- La figure 7 illustre une partie d'un support revêtu d'une couche d'enduit présentant un relief imprimé issu de matriçage avec une matrice selon la figure 1 ;
- La figure 8 illustre une surface à relief d'une matrice selon un deuxième mode de réalisation de l'invention ;
- La figure 9 illustre une surface à relief d'une matrice selon un troisième mode de réalisation de l'invention ;
- La figure 10 illustre une surface à relief d'une matrice selon un quatrième mode de réalisation de l'invention ;
- La figure 11 illustre une surface à relief d'une matrice selon un cinquième mode de réalisation de l'invention ;

### DESCRIPTION DETAILLEE D'EXEMPLES DE REALISATION

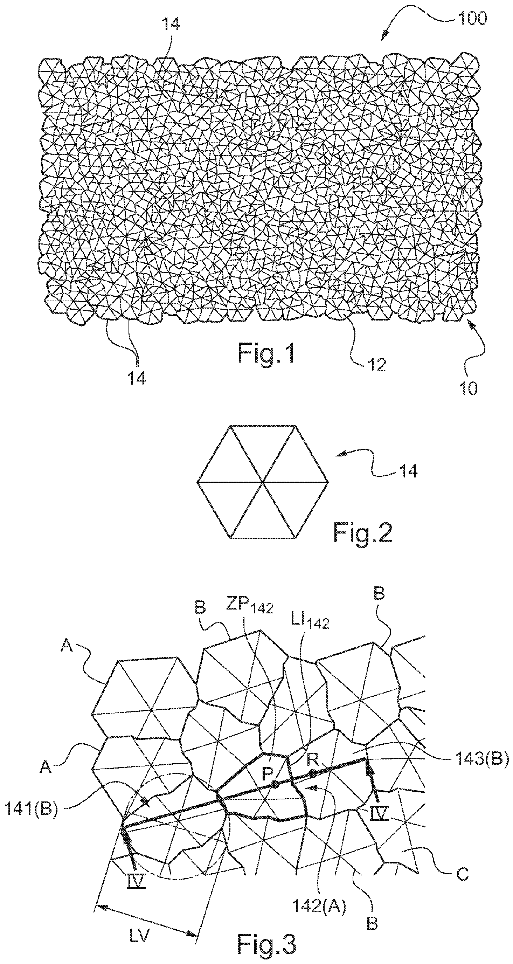

La figure 1 illustre une matrice 100 selon un premier mode de réalisation, destinée à l'impression d'un relief sur un enduit, notamment une façade d'un bâtiment.

La matrice 100 comporte une surface 10 munie d'un relief à imprimer 12 dit aléatoire, formé par un ensemble d'éléments unitaires 14 interpénétrés.

La surface à relief présente une superficie totale typiquement comprise entre 0,1 et 1,5 m².

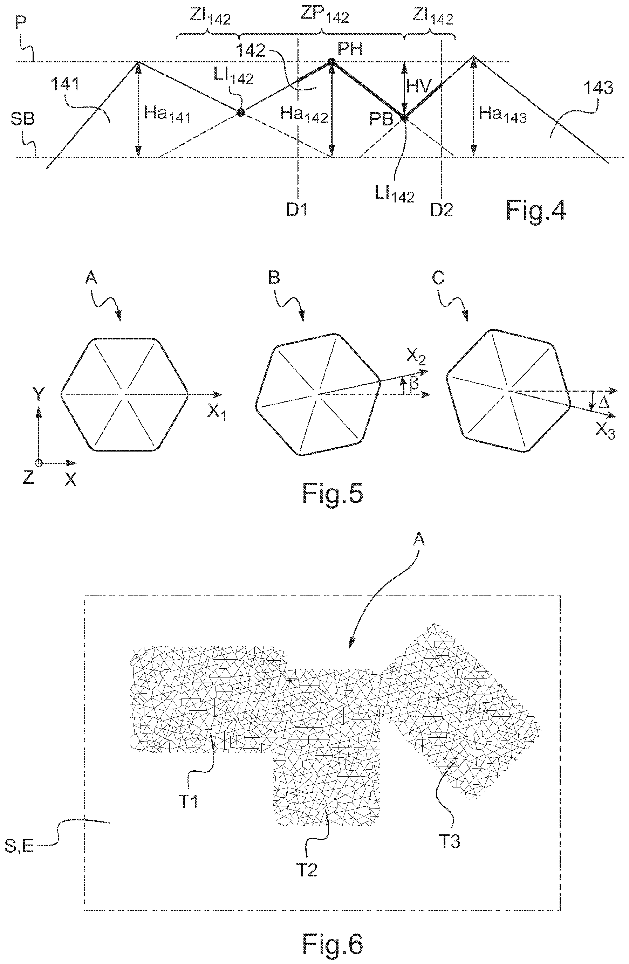

Dans l'exemple, le relief est un relief dit « positif », formé par la juxtaposition aléatoire d'éléments unitaires 14 sur une surface dite surface de base SB de la matrice (figurée de manière indicative sur la figure 4).

En l'espèce, les éléments unitaires 14 du relief 12 de la figure 1 sont des pyramides du type illustré en vue de dessus sur la figure 2, à bases en forme d'hexagone régulier.

La figure 2 illustre une telle pyramide en vue de dessus, et la figure 3 montre plus en détail le relief de la matrice et l'interpénétration des éléments unitaires.

Pour une meilleure compréhension, le profil du relief de la matrice en section dans le plan transversal IV-IV de la figure 3, orthogonal à la surface de base SB de la matrice, est illustré sur la figure 4. Sur cette figure, les éléments en pointillé sont des éléments qui n'existent pas dans le volume final. Ce sont des lignes fictives qui servent uniquement à illustrer comment est composée la structure générale du relief.

Les trois pyramides hexagonales 141, 142 et 143 apparaissant sur la figure 4 seront décrites plus en détail à titre d'exemple.

Dans l'exemple, la surface de base SB est une surface plane, définie lors de la modélisation de la matrice. Le relief est formé en juxtaposant les pyramides de façon aléatoire sur cette surface de base, les bases des pyramides étant ainsi confondues avec la surface de base de la matrice.

Comme illustré sur la figure 4, les hauteurs absolues des pyramides 141, 142, 143, autrement dit la hauteur de leur sommet par rapport à la surface de base B, sont notées respectivement Ha₁₄₁, Ha₁₄₂ et Ha₁₄₃ et sont identiques avec Ha₁₄₁ = Ha₁₄₂ = Ha₁₄₃ = Ha. Les sommets des pyramides formant le relief à imprimer sont donc définis dans un même plan P, illustré en pointillé sur la figure 4.

Selon l'invention, chaque pyramide formant le relief à imprimer s'interpénètre avec au moins une pyramide adjacente. Les pyramides sont donc localement confondues et chaque pyramide s'étend sur une zone propre ZP, sur laquelle le relief correspond à son relief propre, et sur une zone d'interpénétration ZI, où la pyramide est confondue avec une ou plusieurs pyramide(s) adjacente(s) et où le relief correspond au relief de l'une ou l'autre pyramide.

On peut en particulier définir, pour chaque pyramide 14, une ligne d'interpénétration LI continue et refermée sur elle-même délimitant la zone propre ZP. A titre d'exemple, la zone propre ZP₁₄₂ de la pyramide 142 est référencée sur la figure 3, et la ligne d'interpénétration LI₁₄₂ de ladite pyramide est illustrée en gras sur la même figure. Les zones propres et d'interpénétration respectivement ZP₁₄₂ et ZI₁₄₂ de la pyramide 142 et lignes d'interpénétration LI₁₄₂ sont par ailleurs repérées sur la figure 4.

Les pyramides 14 s'interpénètrent ici de manière invisible. Autrement dit, la partie de chaque pyramide 14 s'étendant au-delà de sa zone propre ZP ne peut plus être distinguée, car elle se confond avec les zones propres des pyramides adjacentes.

La hauteur absolue Ha, définie précédemment, est donc difficilement mesurable sur le produit fini.

Il est néanmoins possible de mesurer la hauteur visible moyenne du relief, de la façon suivante à partir du profil de la matrice (en coupe selon l'axe IV-IV).

Un élément du profil est défini comme la succession d'une saillie du profil et un creux adjacent du profil. Sur la figure 4, un élément du profil est défini entre les deux lignes D1 et D2 et illustré en gras.

La hauteur visible HV de cet élément du profil est définie comme la hauteur mesurée entre le point le plus haut PH de cet élément (sommet de la saillie) et son point le plus bas PB (point bas du creux).

Finalement, la hauteur visible moyenne des pyramides du relief est définie comme la moyenne arithmétique des valeurs absolues des hauteurs visibles HV des différents éléments du profil sur une longueur de base de 10 centimètres. Cette hauteur visible moyenne est par exemple comprise entre 0,5 et 50 mm, de préférence comprise entre 1 et 10 mm.

La largeur visible d'une pyramide 14 correspond au diamètre du plus petit cercle dans lequel s'inscrit la zone propre ZP de ladite pyramide 14. Sur la figure 3, on a par exemple représenté la largeur visible LV de la pyramide 141.

La largeur visible maximale des pyramides 14 du relief est typiquement comprise entre 1 et 100 mm.

Le relief à imprimer comporte avantageusement entre 10 et 10 000 éléments unitaires par m² de surface.

On note que dans l'exemple particulier illustré, les pyramides 14 n'ont pas toutes la même orientation.

En particulier, comme illustré sur la figure 3, le relief comprend ici un premier groupe de pyramides A (auquel appartient notamment la pyramide 142), un deuxième groupe de pyramides B (auquel appartiennent notamment les pyramide 141 et 143) et un troisième groupe de pyramides C de même forme et dimensions mais d'orientation différentes, les éléments de chaque groupe étant répartis de manière aléatoire sur la surface de la matrice.

Sur la figure 5, on a illustré une pyramide du premier groupe A (référencée A), une pyramide du deuxième groupe B (référencée B) et une pyramide du deuxième groupe C (référencée C), dans un repère X, Y, Z. Les bases des pyramides A, B, C sont définies dans le plan X, Y. Les axes des pyramides sont parallèles à l'axe Z.

Comme il ressort de la figure 5, la base de la pyramide B est ici pivotée par rapport à celle de la pyramide A d'un angle β compris strictement entre 0 et 30° autour d'un axe parallèle à Z, dans le sens inverse des aiguilles d'une montre. Dans le même plan, la base de la pyramide C est pivotée par rapport à celle de la pyramide A d'un angle Δ compris strictement entre 0 et 30° autour d'un axe parallèle à Z, dans le sens des aiguilles d'une montre. Bien évidemment, cet exemple n'est pas limitatif, et les différences d'orientation entre les différents groupes d'éléments unitaires pourront être très variables (angles différents dans un même sens de pivotement par exemple).

Le relief 12 tel que défini précédemment est capable de se superposer à lui-même sans raccords visibles et sans destruction de sa lisibilité. Lors du matriçage dont une étape est illustrée sur la figure 6, la surface de support S recouverte d'enduit frais (i.e. non encore durci) E est traitée sur différentes zones Ti (ci-après zones de traitement) se recoupant partiellement (i.e. partiellement superposées). Par traitées, on entend ici imprimées par application de la matrice 100. Malgré le recouvrement des zones de traitement, le relief imprimé est très homogène. Les zones de superposition ne peuvent pas être distinguées visuellement des zones de non-superposition. Le dessin représenté sur cette figure constitue le relief total recomposé par les applications successives de la matrice, tel qu'il est vu par l'enduit E dont la position se situe en avant du plan de la feuille.

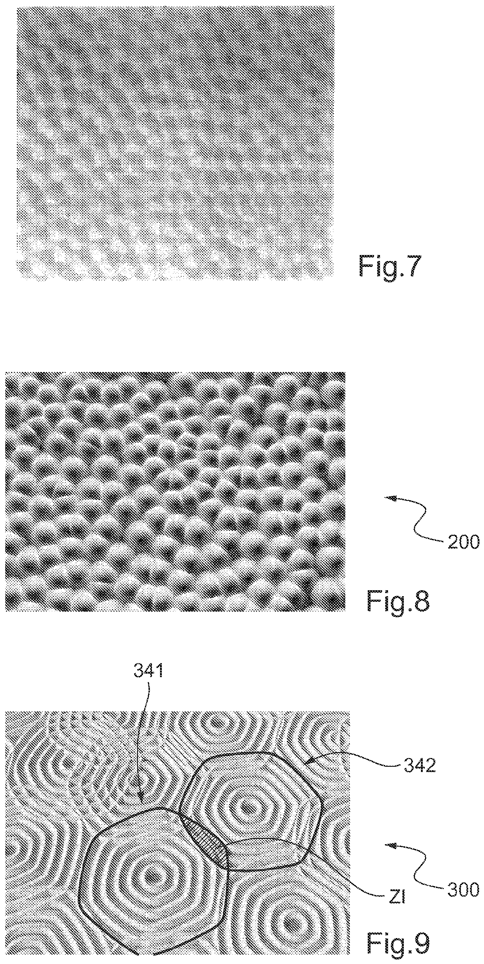

Un support S muni d'un relief imprimé R à l'aide de ladite matrice décrite ci-dessus est illustré sur la figure 7. Le relief imprimé R sur le support S correspond à une image en négatif du relief 12 à imprimer de la matrice.

L'exemple décrit en liaison avec les figures 1 à 7 n'est toutefois pas limitatif, et selon des variantes de réalisation, le relief peut notamment être formé d'éléments unitaires de même orientation mais de dimensions variables, ou d'éléments unitaires de même forme, mêmes dimensions et même orientation, ou encore d'éléments de formes, dimensions ou orientations différentes, etc.

La figure 8 illustre une matrice 200 selon un deuxième mode de réalisation, comprenant une surface à relief formé par un ensemble de protubérances arrondies de même forme et mêmes dimensions, interpénétrées de façon aléatoire et invisible.

Les figures 9 à 11 illustrent des surfaces à relief de matrices selon d'autres modes de réalisation de l'invention.

Contrairement aux deux premiers modes de réalisation décrits précédemment, les reliefs illustrés ici sont des reliefs à interpénétration visible. Sur les zones d'interpénétration, il est possible de distinguer les parties de l'un et l'autre des éléments unitaires interpénétrés.

Dans le mode de réalisation de la figure 9, par exemple, la matrice 300 présente un relief formé par un ensemble d'éléments unitaires interpénétrés, chaque élément unitaire étant constitué d'une pluralité de nervures concentriques (ici six). L'élément unitaire est ici formé par une nervure centrale circulaire et cinq nervures hexagonales à côtés courbes.

On a représenté en gras sur la figure les bords périphériques de deux éléments unitaires 341, 342 interpénétrés. La zone hachurée correspond à la zone d'interpénétration ZI de l'élément unitaire 341 avec l'élément unitaire 342. Sur cette zone, il est néanmoins possible de distinguer les nervures de l'élément adjacent 342.

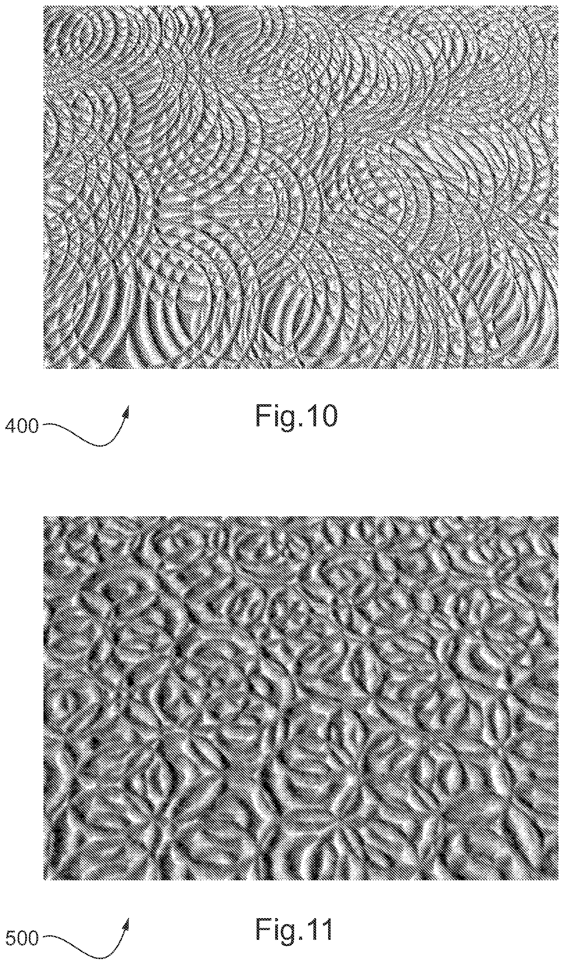

Dans le mode de réalisation de la figure 10, la matrice 400 présente un relief formé par un ensemble d'éléments unitaires interpénétrés, chaque élément unitaire étant constitué d'une pluralité de nervures circulaires concentriques (ici quatre).

Dans le mode de réalisation de la figure 11, la matrice 500 présente un relief formé par un ensemble d'éléments unitaires interpénétrés, chaque élément unitaire étant constitué d'une pluralité de nervures circulaires concentriques (ici deux).

## Revendications

1. Matrice (100, 200, 300, 400, 500) destinée à l'impression d'un relief sur un enduit (E), notamment un enduit appliqué sur une paroi, un sol ou un plafond ou appliqué sur un élément préfabriqué entrant dans la constitution d'une paroi, d'un sol ou d'un plafond, ladite matrice comprenant une surface (10) munie d'un relief à imprimer aléatoire, et étant **caractérisée en ce que** ledit relief à imprimer aléatoire est formé par un ensemble d'éléments unitaires interpénétrés, chaque élément unitaire étant tronqué par l'intersection de son volume avec le volume d'au moins un autre élément unitaire adjacent.

2. Matrice (100, 200, 300, 400, 500) selon la revendication 1, dans laquelle le relief (12) comprend au moins un premier groupe d'éléments unitaires (A) et au moins un deuxième groupe d'éléments unitaires (B) de forme identique à ceux du premier groupe mais présentant une orientation différente par rapport à ceux du premier groupe, les éléments de chaque groupe (A, B) étant répartis de manière aléatoire sur la surface de la matrice.

3. Matrice (100, 200, 300, 400, 500) selon la revendication 1 ou 2, dans laquelle tous les éléments unitaires (14) du relief (12) sont de forme identique.

4. Matrice (100, 200, 300, 400, 500) selon la revendication 3, dans laquelle tous les éléments unitaires (14) du relief (12) sont de forme identique et de dimensions variables.

5. Matrice (100, 200, 300, 400, 500) selon la revendication 3, dans laquelle tous les éléments unitaires (14) du relief (12) sont de forme identique et de dimensions identiques.

6. Matrice (100, 200) selon l'une quelconque des revendications 1 à 5, dans laquelle le relief à imprimer (12) est un relief à interpénétration invisible.

7. Matrice (100) selon l'une quelconque des revendications 1 à 6, dans laquelle les éléments unitaires (14) sont de forme polyédrique, dont les arêtes peuvent être droites ou courbes, et les faces peuvent être planes ou courbes, notamment pyramidale, de préférence avec comme base un polygone à au moins 3 cotés.

8. Matrice (300, 400, 500) selon l'une quelconque des revendications 1 à 5, dans laquelle le relief à imprimer (12) est un relief à interpénétration visible.

9. Matrice (100, 200, 300, 400, 500) selon l'une quelconque des revendications 1 à 8, dans laquelle la hauteur visible moyenne des éléments unitaires du relief à imprimer est comprise entre 0.5 et 50 mm, de préférence comprise entre 1 et 20 mm.

10. Matrice (100, 200, 300, 400, 500) selon l'une quelconque des revendications 1 à 9, dans laquelle la largeur visible maximale des éléments unitaires du relief à imprimer est comprise entre 1 et 100 mm.

11. Matrice (100, 200, 300, 400, 500) selon l'une quelconque des revendications 1 à 10, dans laquelle la surface (10) munie du relief (12) présente une superficie totale comprise entre 0,1 et 1,5 m².

12. Matrice (100, 200, 300, 400, 500) selon l'une quelconque des revendications 1 à 11, dans laquelle le relief à imprimer (12) comporte entre 10 et 10000 éléments unitaires par m² de surface.

13. Outil destiné à l'impression d'un relief sur un enduit (E), notamment un enduit appliqué sur une paroi, d'un sol ou d'un plafond ou appliqué sur élément préfabriqué entrant dans la constitution d'une paroi, d'un sol ou d'un plafond (S), comprenant une matrice selon l'une quelconque des revendications 1 à 12.

14. Support (S) choisi parmi une paroi, un sol ou un plafond ou un élément préfabriqué destiné à former une paroi, un sol ou un plafond, ledit support étant revêtu d'un enduit ou ledit élément présentant une couche superficielle, présentant un relief imprimé (R) susceptible d'être issu de matriçage avec une matrice (100, ..., 500) selon l'une quelconque des revendications précédentes, **caractérisé en ce que** le relief imprimé (R) correspond à l'empreinte laissée par un relief à imprimer (12) aléatoire, formé par un ensemble d'éléments unitaires (14) interpénétrés, chaque élément unitaire étant tronqué par l'intersection de son volume avec le volume d'au moins un autre élément unitaire adjacent.

15. Méthode d'impression d'un relief sur un enduit (E), notamment un enduit appliqué sur une zone donnée d'une paroi, d'un sol ou d'un plafond ou appliqué sur un élément préfabriqué entrant dans la constitution d'une paroi, d'un sol ou d'un plafond, ladite impression étant réalisée avec un outil comprenant la matrice selon l'une des revendication 1 à 12, **caractérisée en ce que** ladite méthode comprend une étape consistant à appliquer l'outil sur une pluralité de zone de traitement pour imprimer ledit relief, l'application de l'outil étant réalisée de façon aléatoire, jusqu'à ce que toute la surface de ladite zone à imprimer soit recouverte du motif.

16. Méthode d'impression selon la revendication 15, **caractérisée en ce que** l'étape d'application est réalisée pour qu'au moins une partie des zones de traitement se chevauchent.

## Patentansprüche

1. Matrize (100, 200, 300, 400, 500) zum Prägen eines Reliefmusters auf einer Beschichtung (E), insbesondere einer Beschichtung aufgetragen auf einer Wand, einem Boden oder einer Decke oder aufgetragen auf einem Fertigbauteil, zugehörig zum Aufbau einer Wand, eines Bodens oder einer Decke, wobei die Matrize eine Oberfläche (10) umfasst, die mit einem willkürlichen Reliefmuster zum Prägen versehen ist, und **dadurch gekennzeichnet, dass** das willkürliche Reliefmuster zum Prägen durch eine Gesamtheit aus einheitlichen miteinander verflochtenen Elementen gebildet wird, wobei jedes einheitliche Element durch Verschneidung seines Volumens mit dem Volumen von mindestens einem anderen angrenzenden einheitlichen Element abgeschnitten wird.

2. Matrize (100, 200, 300, 400, 500) nach Anspruch 1, wobei das Reliefmuster (12) mindestens eine erste Gruppe von einheitlichen Elementen (A) und mindestens eine zweite Gruppe von einheitlichen Elementen (B) derselben Form wie jene der ersten Gruppe mit jedoch einer unterschiedlichen Ausrichtung in Bezug auf jene der ersten Gruppe umfasst, wobei die Elemente jeder Gruppe (A, B) auf willkürliche Weise auf die Oberfläche der Matrize verteilt wurden.

3. Matrize (100, 200, 300, 400, 500) nach Anspruch 1 oder 2, wobei alle einheitlichen Elemente (14) des Reliefmusters (12) dieselbe Form aufweisen.

4. Matrize (100, 200, 300, 400, 500) nach Anspruch 3, wobei alle einheitlichen Elemente (14) des Reliefmusters (12) dieselbe Form und variable Abmessungen aufweisen.

5. Matrize (100, 200, 300, 400, 500) nach Anspruch 3, wobei alle einheitlichen Elemente (14) des Reliefmusters (12) dieselbe Form und dieselben Abmessungen aufweisen.

6. Matrize (100, 200) nach einem der Ansprüche 1 bis 5, wobei das zu prägende Reliefmuster (12) ein unsichtbares miteinander verflochtenes Reliefmuster ist.

7. Matrize (100) nach einem der Ansprüche 1 bis 6, wobei die einheitlichen Elemente (14) eine polyedrische Form aufweisen, dessen Kanten gerade oder geschwungen sein können und dessen Flächen eben oder geschwungen sein können, insbesondere pyramidenförmig, vorzugsweise mit einem Polygon mit mindestens 3 Seiten als Basis.

8. Matrize (300, 400, 500) nach einem der Ansprüche 1 bis 5, wobei das zu prägende Reliefmuster (12) ein sichtbares miteinander verflochtenes Reliefmuster ist.

9. Matrize (100, 200, 300, 400, 500) nach einem der Ansprüche 1 bis 8, wobei die sichtbare mittlere Höhe der einheitlichen Elemente des zu prägenden Reliefmusters zwischen 0,5 und 50 mm beträgt, vorzugsweise zwischen 1 und 20 mm.

10. Matrize (100, 200, 300, 400, 500) nach einem der Ansprüche 1 bis 9, wobei die sichtbare maximale Breite der einheitlichen Elemente des zu prägenden Reliefmusters zwischen 1 und 100 mm beträgt.

11. Matrize (100, 200, 300, 400, 500) nach einem der Ansprüche 1 bis 10, wobei die versehene Oberfläche (10) des Reliefmusters (12) eine Gesamtfläche zwischen 0,1 und 1,5 m² aufweist.

12. Matrize (100, 200, 300, 400, 500) nach einem der Ansprüche 1 bis 11, wobei das zu prägende Reliefmuster (12) zwischen 10 und 10.000 einheitliche Elemente pro m² der Oberfläche umfasst.

13. Werkzeug zum Prägen eines Reliefmusters auf einer Beschichtung (E), insbesondere eine Beschichtung aufgetragen auf einer Wand, einem Boden oder einer Decke oder aufgetragen auf einem Fertigbauteil, zugehörig zum Aufbau einer Wand, eines Bodens oder einer Decke (S), umfassend eine Matrize nach einem der Ansprüche 1 bis 12.

14. Träger (S) ausgewählt aus einer Wand, einem Boden oder einer Decke oder einem Fertigbauteil zum Bilden einer Wand, einem Boden oder einer Decke, wobei der Träger mit einer Beschichtung beschichtet ist oder wobei das Bauteil eine Oberflächenschicht aufweist, ein geprägtes Reliefmuster (R) aufweist, das aufgrund einer Prägung mit einer Matrize (100, ..., 500) nach einem der vorstehenden Ansprüche vorliegt, **dadurch gekennzeichnet, dass** das geprägte Reliefmuster (R) einer durch Einprägung hinterlassen durch ein willkürliches Reliefmuster zum Prägen (12) entspricht, die durch eine Gesamtheit von einheitlichen miteinander verflochtenen Elementen (14) gebildet wird, wobei jedes einheitliche Element durch Verschneidung seines Volumens mit dem Volumen von mindestens einem anderen angrenzenden einheitlichen Element abgeschnitten wird.

15. Verfahren zum Prägen eines Reliefmusters auf einer Beschichtung (E), insbesondere eine Beschichtung aufgetragen auf einen gegebenen Bereich einer Wand, eines Bodens oder einer Decke oder aufgetragen auf einem Fertigbauteil, zugehörig zum Aufbau einer Wand, eines Bodens oder einer Decke, wobei die Prägung mit einem Werkzeug durchgeführt wird, das die Matrize nach einem der Ansprüche 1 bis 12 umfasst, **dadurch gekennzeichnet, dass** das Verfahren einen Schritt umfasst, bestehend aus dem Auftragen des Werkzeugs auf eine Vielzahl von Bereichen zur Behandlung, um das Reliefmuster zu prägen, wobei die Auftragung des Werkzeugs auf willkürliche Weise durchgeführt wird, bis die gesamte zu prägende Oberfläche dieses Bereichs mit dem Motiv bedeckt ist.

16. Verfahren zum Prägen nach Anspruch 15, **dadurch gekennzeichnet, dass** der Schritt der Auftragung so durchgeführt wird, dass mindestens ein Teil der Bereiche zur Behandlung sich überlappen.

## Claims

1. A mat (100, 200, 300, 400, 500) intended for imprinting a texture on a coating (E), notably a coating applied to a wall, a floor or a ceiling or to a prefabricated element used in the construction of a wall, a floor or a ceiling, said mat having a surface (10) provided with a random texture to be imprinted, , and **characterized in that** said random texture to be imprinted is formed by a set of interpenetrating unitary elements, each unitary element being truncated by the intersection of its volume with the volume of at least one other adjacent unitary element.

2. The mat (100, 200, 300, 400, 500) as claimed in claim 1, in which the texture (12) comprises at least one first group of unitary elements (A) and at least one second group of unitary elements (B) of identical shape to those of the first group but having a different orientation to that of those of the first group, the elements of each group (A, B) being distributed in a random manner over the surface of the mat.

3. The mat (100, 200, 300, 400, 500) as claimed in claim 1 or 2, in which all the unitary elements (14) of the texture (12) are of identical shape.

4. The mat (100, 200, 300, 400, 500) as claimed in claim 3, in which all the unitary elements (14) of the texture (12) are of identical shape with varying dimensions.

5. The mat (100, 200, 300, 400, 500) as claimed in claim 3, in which all the unitary elements (14) of the texture (12) are of identical shape with identical dimensions.

6. The mat (100, 200) as claimed in any one of claims 1 to 5, in which the texture (12) to be imprinted is an invisible interpenetration texture.

7. The mat (100) as claimed in any one of claims 1 to 6, in which the unitary elements (14) are of polyhedral shape, the edges of which can be straight or curved, and the faces of which can be plane or curved, notably pyramidal, preferably with as base a polygon with at least 3 sides.

8. The mat (300, 400, 500) as claimed in any one of claims 1 to 5, in which the texture (12) to be imprinted is a visible interpenetration texture.

9. The mat (100, 200, 300, 400, 500) as claimed in any one of claims 1 to 8, in which the average visible height of the unitary elements of the texture to be imprinted is between 0.5 and 50 mm inclusive, preferably between 1 and 20 mm inclusive.

10. The mat (100, 200, 300, 400, 500) as claimed in any one of claims 1 to 9, in which the maximum visible width of the unitary elements of the texture to be imprinted is between 1 and 100 mm inclusive.

11. The mat (100, 200, 300, 400, 500) as claimed in any one of claims 1 to 10, in which the surface (10) with the texture (12) has a total surface area between 0.1 and 1.5 m² inclusive.

12. The mat (100, 200, 300, 400, 500) as claimed in any one of claims 1 to 11, in which the texture (12) to be imprinted includes between 10 and 10 000 unitary elements per m² of surface area.

13. A tool for imprinting a texture on a coating (E), notably a coating applied to a wall, a floor or a ceiling or to a prefabricated element used in the construction of a wall, a floor or a ceiling (S), comprising a mat as claimed in any one of claims 1 to 12.

14. A substrate (S) chosen from a wall, a floor or a ceiling or a prefabricated element intended to form a wall, a floor or a ceiling, said substrate being coated with a coating or said element having a surface layer featuring an imprinted texture (R) that can be produced by a mat (100, ..., 500) as claimed in any one of the preceding claims, **characterized in that** the imprinted texture (R) corresponds to the imprint left by a random texture (12) to be imprinted, formed by a set of interpenetrating unitary elements (14), each unitary element being truncated by the intersection of its volume with the volume of at least one other adjacent unitary element.

15. A method of imprinting a texture on a coating (E), notably a coating applied to a given area of a wall, a floor or a ceiling or to a prefabricated element used in the construction of a wall, a floor or a ceiling, said imprinting being done with a tool comprising the mat as claimed in any one of claims 1 to 12, **characterized in that** said method comprises a step consisting in applying the tool to a plurality of treatment zones to imprint said texture, the tool being applied in a random manner, until the entire surface of said zone to be imprinted is covered with the pattern.

16. The imprinting method as claimed in claim 15, **characterized in that** the application step is carried out for at least some of the overlapping treatment zones.
